# FASCICULE DE BREVET EUROPEEN

(11) **EP 1 303 812 B1**
(45) Date de publication et mention de la délivrance du brevet: **22.11.2006**
(21) Numéro de dépôt: 01949593.6
(22) Date de dépôt: 29.06.2001
(51) Int. Cl.: G06F 9/445, H04L 29/06, H04L 29/08

(54) **PROCEDE DE TRANSMISSION D'UN AGENT MOBILE DANS UN RESEAU; EMETTEUR, RECEPTEUR, ET AGENT MOBILE ASSOCIES**
VERFAHREN ZUR ÜBERTRAGUNG EINES MOBILEN AGENTEN IN EINEM NETZWERK; SENDER, EMPFÄNGER UND ZUGEHÖRIGER MOBILER AGENT
METHOD FOR TRANSMITTING A MOBILE AGENT IN A NETWORK, ASSOCIATED TRANSMITTER, RECEIVER AND MOBILE AGENT

(30) Priorité: 30.06.2000 FR 0008515
(43) Date de publication de la demande: 23.04.2003
(73) Titulaire: Thales, 75008 Paris (FR)
(72) Inventeur: DELAUTRE, Antoine Thales Intellectual Property, F-94117 Arcueil Cedex (FR); GILLARDEAU, Sébastien Thales Intellectual Prop., F-94117 Arcueil Cedex (FR); RUIZ, Pascal Thales Intellectual Property, F-94117 Arcueil Cedex (FR)
(74) Mandataire: Lucas, Laurent Jacques
(86) Numéro de dépôt international: PCT/FR2001/002096
(87) Numéro de publication internationale: WO 2002/001313

(56) Documents cités:
- EP-A- 0 961 205
- US-A- 5 726 984
- US-A- 5 818 838
- US-A- 5 850 388
- KULKARNI A.B. ET AL: 'Implementation of a prototype active network' OPEN ARCHITECTURES AND NETWORK PROGRAMMING, 1998 IEEE SAN FRANCISCO, CA, USA 3-4 APRIL 1998, NEW YORK, NY, USA,IEEE, US 03 Avril 1998, pages 130 - 142, XP010272580

## Description

L'invention concerne la transmission d'un code exécutable dans un réseau.

Une solution est l'utilisation d'un agent mobile. L'agent mobile comporte un code exécutable, des données et l'état d'exécution. Il est dit mobile car capable de s'exécuter et de migrer, de manière autonome, sur différents noeuds d'un réseau à différents instants. La transmission non seulement d'un code exécutable C mais aussi des éléments tels que, notamment, des données D, un parcours P, permet au code C d'être exécutable de façon autonome.

De manière générale, l'agent mobile est transmis d'un noeud vers un autre sous forme de fichier, par exemple de code produit par la compilation du code source donnant lieu à un code exécutable ou interprétable.

La demande de brevet EP 0 961 205 propose un tel agent mobile : le code objet est converti d'abord en code MPU puis en code intermédiaire, i.e. en un code natif qui peut être utilisé comme un code exécutable pour aussi bien un dispositif de communication avec une MPU ordinaire qu'une machine JAVA virtuelle, avant d'être ajouté à une liste de parcours pour constituer l'agent émis.

La publication de Kulkarni « Implementation of a prototype active network » open architectures and network programming, 1998 IEEE San Francisco, CA, USA 3-4 April 1998, New York, NY, USA, IEEE, US, 3 avril 1998 pages 130-142 XP010272580, concerne l'implémentation d'un réseau actif dans lequel le code et les données d'un programme sont placés dans des paquets spécialisés. En fonction de la nature du code du paquet spécifique, le paquet modifie le comportement d'un noeud actif ou bien transforme la donnée qu'il transporte. Cette implémentation comprend notamment une étape où l'on crée une nouvelle structure de réseau sur un réseau actif. Il ne pose pas le problème de réseau radio dont les liens peuvent être fluctuants.

La transmission d'un agent mobile sur un réseau pose des problèmes liés au type de réseau emprunté. Considérons, par exemple, le réseau radio, les principales difficultés rencontrées sont :
- le faible débit de transmission,
- les fortes perturbations,
- la visibilité indéfinie et fluctuante...

Des traitements efficaces et adaptés à l'objet code exécutable dont le format standard est de type fichier de bytecodes ont été étudiés et développés afin de permettre sa transmission. Les traitements en question ont une efficacité proportionnelle à l'importance en taille du fichier (plus la taille est importante plus le traitement est efficace). Pour des techniques "classique" d'échange de message comportant des agents mobiles, il est nécessaire de développer un protocole car les techniques pré-citées ne sont plus viables. Or, un protocole est généralement lourd, coûteux et complexe.

La présente invention permet de palier ces inconvénients grâce aux caractéristiques de la revendication 1. Un agent mobile A comportant au moins un code exécutable autonome C et des données associées D et suivant un parcours P est transmis sous la forme d'un flux de bits. Ce code C s'éxécute de manière autonome sur les noeuds N du parcours P, stockant les données obtenues D_{R} et le contexte d'exécution lors de la transmission DE.
L'invention propose un procédé selon la revendication 1 de transmission d'un agent mobile (A) dans un réseau radio (R) dont les liaisons sont fluctuantes. L'agent mobile comporte au moins un code exécutable (C), des données associées (D) audit agent mobile (A) et une méthode de parcours P, des noeuds cibles sur lesquels l'agent mobile doit s'exécuter. La transmission non seulement dudit code exécutable (C) mais aussi desdites données associées (D) et de ladite méthode de parcours (P) permettent audit code exécutable (C) d'être exécutable de façon autonome, en particulier en ce que l'ordre de parcours des noeuds n'est pas défini a priori, et en ce qu'on laisse l'agent mobile réaliser son parcours en éxécutant ladite méthode de parcours, prenant en compte la qualité variable au cours du temps des liaisons radios. Le procédé de transmission d'un agent mobile comprend :
- [T2-T3] : la conversion (A/F) dudit agent mobile (A) en un flux de bits (f_{A}) à émettre par un émetteur (EA) d'un noeud émetteur (N_{E}),
- [T5-T6] : la création d'un lien entre ledit noeud émetteur (N_{E}) et au moins un noeud récepteur (N_{R}) dans ledit réseau (R) sur lequel ledit flux de bits (f_{A}) est émis,
- [T7] : l'émission dudit flux de bits (f_{A}) par l'émetteur (EA) dudit noeud émetteur (N_{E}) vers le/les au moins un noeud récepteur (N_{R}).
La création de lien comporte au moins les étapes suivantes :
- [T5] : l'exécution de ladite méthode de parcours (P) des noeuds cibles sur lesquels l'agent mobile (A) doit s'exécuter, au moyen dudit agent mobile (A) comportant ladite méthode de parcours (P),
- la génération de paramètres de transfert du noeud émetteur vers ledit/lesdits au moins un noeuds récepteurs par l'exécution de ladite méthode de parcours (P),
- l'utilisation de paramètres pour ouvrir un canal de communication entre le noeud émetteur (N_{E}) et ledit/lesdits au moins un noeuds récepteurs (N_{R}),
- la fermeture dudit canal, cette fermeture ayant lieu après ladite étape d'émission dudit flux de bits.

Les différentes étapes de ce procédé de transfert peuvent être réalisées par un émetteur d'agent mobile dans un réseau comportant :
- un convertisseur général d'agent mobile en flux de bits à émettre comportant aux moins les attributs suivants :
   - une entrée recevant un agent mobile,
   - une sortie délivrant le flux de bits à émettre résultant,
- un émetteur de flux de bits comportant une entrée recevant ledit flux de bits à émettre, comportant au moins un créateur de lien (CL) entre ledit émetteur d'agent mobile (EA) et au moins un récepteur (RA) du réseau (R ) comportant au moins les attributs suivants :
   - un moyen de gestion de l'exécution d'une méthode de parcours (P) des noeuds cibles sur lesquels l'agent mobile (A) doit s'exécuter, ledit agent mobile (A) comportant ladite méthode de parcours (P), l'exécution générant au moins un ordre d'ouverture d'un canal de communication constituant ledit lien comportant les paramètres de transfert généré lors de l'exécution de ladite méthode de parcours (P),
   - une sortie sur laquelle est délivré un signal comportant au moins les ordres suivants :
      - d'ouverture d'un canal de communication constituant ledit lien, et
      - de rupture dudit lien créé.

L'agent mobile peut être reçu par un récepteur d'agent mobile comportant les moyens suivants :
- un récepteur de flux de bit recevant un flux de bits,
- un extracteur d'agent mobile dans un flux de bits comportant au moins un des attributs suivants :
   - une entrée recevant ledit flux de bits reçu,
   - une sortie délivrant ledit agent mobile extrait,
comportant au moins :
- un vérificateur (VA) de l'autorisation d'exécuter l'agent mobile (A) sur le noeud récepteur (N_{R}) comportant au moins les attributs suivants:
   - une entrée liée à la sortie du récepteur de flux de bits recevant le flux de bits (f_{A}) reçu,
   - une sortie délivrant audit extracteur d'agent mobile ledit flux de bits (f_{A}) si la vérification est positive,
- ledit extracteur d'agent mobile (Exa) comportant les attributs suivants :
   - un extracteur de code exécutable relié à l'entrée recevant ledit flux (f_{A}) et délivrant le code exécutable (C) de l'agent mobile (A) extrait dudit flux (f_{A}),
   - un extracteur de données relié à l'entrée recevant ledit flux (f_{A}) et délivrant les données (D) associées à l'agent mobile (A) et extraite dudit flux (f_{A}),
un moyen de positionnement (PP) des paramètres d'exécution DE compris ou non dans les données (D) extraites.

De manière plus générale, un noeud d'un réseau comportant ledit émetteur d'agent mobile et/ou ledit récepteur d'agent mobile comporte au moins un microprocesseur comportant une interface avec un agent mobile permettant audit agent mobile comportant un code de gérer de manière autonome au moins l'exécution dudit code par ledit microprocesseur, ledit noeud (N) comportant au moins, une source d'agent mobile (SA) :
- une interface (I) comportant au moins les entrées suivantes :
   ➢ une entrée recevant le choix du code exécutable (C) de l'agent mobile (A),
   ➢ une entrée recevant le choix des données (D) associées à l'agent mobile (A),
- un organe de lecture comportant au moins les attributs suivants:
   ➢ une liaison avec ladite interface,
   ➢ un pointeur associant aux données entrantes une adresse dans au moins une mémoire interne ou externe, adresse à laquelle se trouve au moins tout ou partie de l'agent mobile (A),
une sortie délivrant l'agent mobile (A) lu à un émetteur.

L'agent mobile peut comporter, en plus du code exécutable (C) et des données associées (D), une interface avec un noeud, appelé noeud hôte, comportant au moins les moyens suivants :
- des moyens de vérification de l'appartenance du noeud hôte à l'ensemble des noeuds sur lesquels l'agent mobile (A) doit s'exécuter, comportant au moins les moyens suivants :
   - des moyens de déclenchement de la gestion de l'exécution du code (C) de l'agent mobile (A), actifs si la vérification est positive,
   - des moyens de transmission dudit agent mobile (A) à l'émetteur d'agent mobile dudit noeud hôte, actifs si la vérification est négative,
- des moyens de transmission dudit agent mobile (A) mis à jour à l'émetteur d'agent mobile dudit noeud hôte,
- des moyens de test de la méthode de transfert des données (D_{R}) résultant de l'exécution du code (C) comportant au moins les moyens suivants :
   - des moyens de déclenchement de la gestion de l'exécution de ladite méthode, actifs si le test est positif,
   - des moyens de transmission dudit agent mobile (A) comportant au moins le code (C) et les données (D) mises à jours auxquelles ont été adjointes les données (D_{R}) à l'émetteur d'agent mobile dudit noeud hôte, actifs si le test est négatif,
   - des moyens de création d'un agent mobile résultats, A', comportant au moins les données (D_{R}) et la transmission dudit agent mobile résultats, A', à l'émetteur d'agent mobile dudit noeud hôte.

Les caractéristiques et avantages de l'invention apparaîtront plus clairement à la lecture de la description, faite à titre d'exemple, et des figures s'y rapportant qui représentent :
- Figure 1, un schéma de principe de la migration d'un agent dans un réseau,
- Figure 2, un exemple de transmission d'un agent mobile A d'un noeud émetteur N_{E} à un noeud récepteur N_{R},
- Figure 3, un schéma de principe de l'initialisation de la migration d'un agent dans le réseau selon un mode de réalisation de l'invention,
- Figure 4, un schéma de principe du procédé de transfert d'un agent d'un noeud vers un autre noeud du réseau selon l'invention,
- Figure 5, un schéma de principe du procédé la réception d'un agent sur un noeud du réseau selon l'invention,
- Figure 6, un schéma de principe de l'exécution du code de l'agent sur le noeud récepteur.

Les noeuds N d'un réseau R comportent, par exemple, trois types de structure d'accueil d'un agent mobile A:
- Source. Cette structure permet de constituer un agent mobile A (choix du code, des paramètres), de définir son parcours P et d'initialiser sa migration dans le réseau R. Elle comprend, donc, une source d'agent mobile SA et un émetteur d'agent mobile EA.
- Intermédiaire. Cette structure reçoit un agent mobile A, elle lui permet de s'exécuter et le réémet vers au moins un nouveau noeud N. Elle comprend donc, un émetteur EA et un récepteur RA d'agent mobile.
- Final. Cette structure reçoit un agent mobile A et récupère l'ensemble des données D_{R} résultant des exécutions du code C dudit agent mobile A sur différents noeuds N du parcours P. Elle comprend, donc, un récepteur d'agent mobile RA.

Donc, un même noeud peut être source Nₛ pour un premier agent mobile A₁, intermédiaire N_{I} pour un second A₂ et final N_{F} pour un troisième A₃. De plus, le noeud source N_{S} pour un agent mobile donné A peut aussi être le noeud final N_{F} du même agent mobile A.

L'agent mobile A comporte le code exécutable C, les données D associées, la méthode de parcours P du réseau R et différentes interfaces I selon son noeud hôte N_{H}, par exemple:
- **une interface d'initialisation** avec le noeud source N_{S} permettant de recevoir les paramètres D de l'agent mobile A, et d'indiquer le chemin à parcourir,
- **une interface "run"** (interface d'exécution en français) permettant d'utiliser les ressources des noeuds intermédiaires N_{I} lors de l'exécution du code C de l'agent mobile A,
- **une interface machine suivante** permettant d'indiquer aux noeuds intermédiaires N_{I} le noeud de destination suivant N,
- **une interface réponse** permettant au noeud final N_{F} de récupérer des données D.

De plus, l'agent mobile A répond aux caractéristiques suivantes:
- d'indépendance du noeud hôte N_{H} car son code C peut s'exécuter sur différents calculateurs comportant:
   - des microprocesseurs différents (langage machine, taille des mots machines...),
   - des systèmes d'exploitation différents,
   - un accès à des données codées s'effectuant dans des langages différents (C, ADA...)
   - des représentations des types de base (CHAR, INT, BYTE...) différentes...
- de transfert du code exécutable C de l'agent mobile A ainsi que de son contexte d'exécution d'un noeud N à un autre. Pour cela, un mécanisme de conversion de l'agent en un flux de bits f_{A} est mis en place au niveau de chaque structure d'accueil.
- de chargement et d'édition de lien dynamique car l'exécution du code C de l'agent mobile A dans la structure d'accueil du noeud N fait appel aux principes de chargement et d'édition de lien dynamique, s'il n'est pas envisagé d'édition de lien en local sur le noeud hôte N.

L'agent mobile A peut, par exemple, être réalisé en JAVA. Pour permettre à une machine virtuelle JAVA (JVM abréviation anglo-saxonne de JAVA Virtual Machine), c'est à dire au système d'exécution du bytecode JAVA, il faut étendre le ClassLoader standard. En effet, le ClassLoader qui a été développé ne charge pas les classes à partir d'un fichier mais d'un tableau d'octet. Ce format, extrêmement simple et répandu, permet de s'affranchir complètement du canal de transmission des classes ainsi que de leur mode de stockage. Il est donc indépendant d'un quelconque protocole métiers.

### (INITIALISATION N_{S})

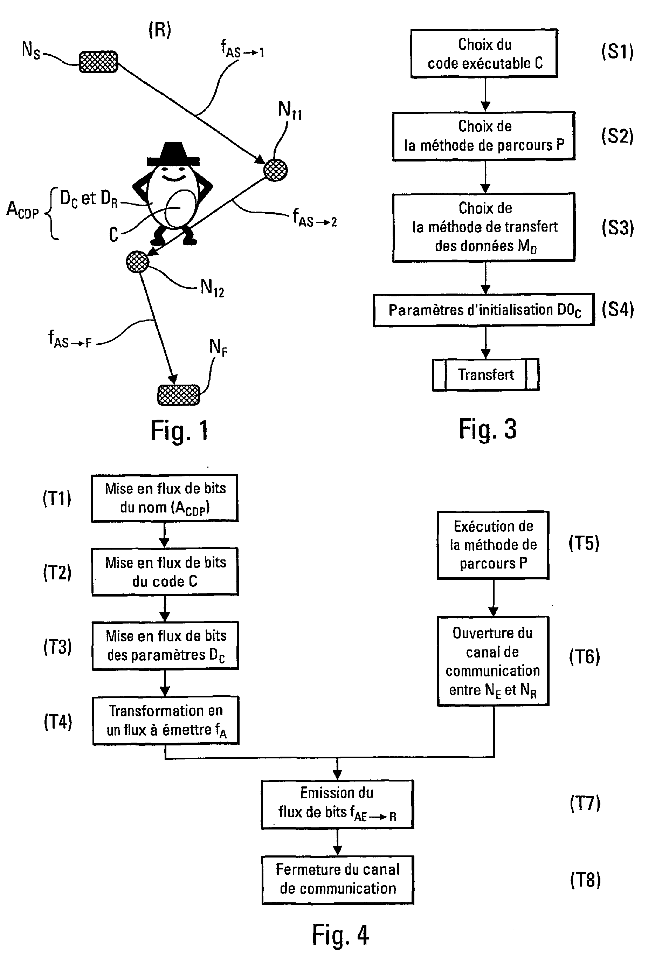

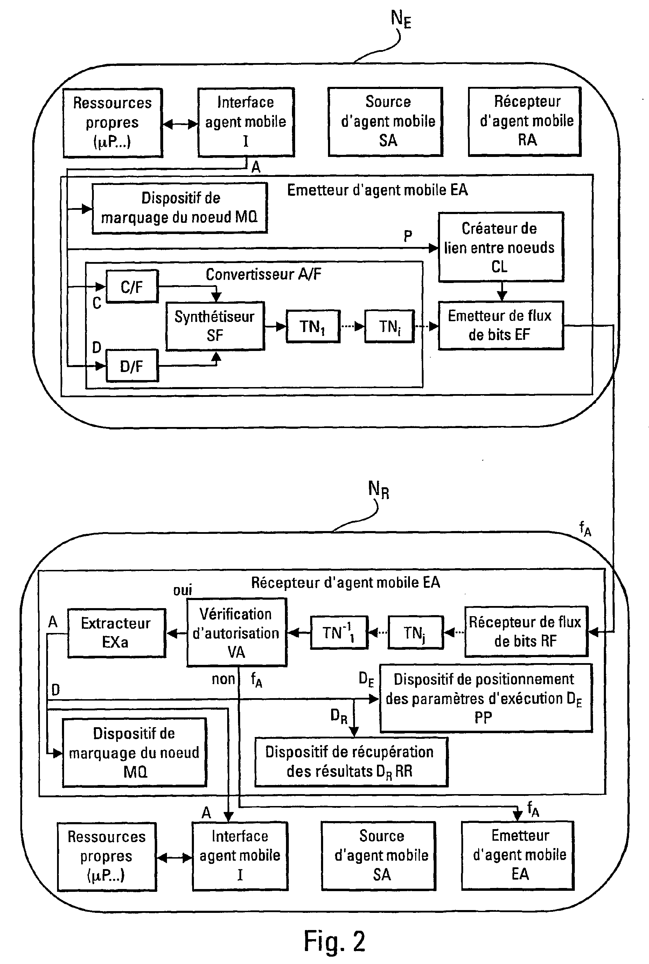

La figure 1 montre un schéma de principe de migration d'un agent mobile A dans un réseau R. L'agent mobile A est défini au niveau du noeud source N_{S} et sa migration dans le réseau R initialisée à partir de ce même noeud source N_{S} comme le présente la figure 3.

La définition de l'agent mobile A consiste à choisir le code exécutable C (étape S1), la méthode de transfert des données D_{R} résultant de l'exécution sur chaque noeud N de ce code C vers le noeud final N_{F} (étape S2), le parcours P de migration de l'agent A sur les noeuds cibles N_{c} du réseau R(étape S2) et les paramètres d'exécution initiaux D0_{E} dudit code exécutable C (étape S4). Les données D contenues dans l'agent A peuvent être, par exemple, des informations, des messages, des paramètres...

La définition de la méthode de transfert des données résultantes de l'exécution d'un code C vers le noeud final N_{F} consiste, par exemple, au niveau de chaque noeud N à faire le choix de transmettre directement ou indirectement au noeud final N_{F} les données résultantes D_{R} selon un critère de sélection, qui peut être le volume de données résultantes D_{R} obtenues. La définition du parcours P se fait par le choix d'une méthode de parcours P des noeuds cibles N_{C}. Cette méthode de parcours P peut être, par exemple, simplement un critère de sélection des noeuds cibles {N}.

L'ensemble des étapes S sont effectuées par une source d'agent mobile SA au sein du noeud source N_{S} présents dans chaque noeud N du réseau R comme le montre la figure 2.

### (EMISSION N_{S→}N_{I1})

Afin de permettre le transfert de l'agent mobile A (étapes T), c'est à dire du code exécutable autonome C, des paramètres associés D, et de la méthode de parcours, l'agent mobile A est, tout d'abord, transformé en un flux de bits f_{A} à émettre par l'émetteur d'agent mobile EA du noeud source N_{S}, semblable à celui proposé en exemple à la figure 2, puis un lien est créé entre le noeud émetteur et au moins un noeud récepteur, et enfin le flux f_{A} est émis sur un canal de communication donné comme proposé, par exemple, par la figure 4.

La transformation du code C en un flux de bits correspond à une transformation non pas sur sa nature même mais sur la manière dont il est perçu par l'environnement dans lequel il réside. C'est en quelque sorte un changement de "statut". La transmission sous forme de flux de bits permet non seulement de transmettre le code C mais les données D , le parcours P et éventuellement d'autres éléments permettant ainsi au code éxécutable d'être éxécutable de façon autonome.

Le nom de l'agent mobile Nom[A], le code exécutable C de cet agent mobile A et les paramètres associés D au code C de cet agent mobile A sont mis sous la forme de flux de bits (étape T1 à T3) par différents convertisseurs élémentaires: C/F pour le code, D/F pour les données... Les différents flux de bits sont transformés en un flux à émettre f_{A}, c'est à dire sont regroupés en un seul flux grâce au synthétiseur SF et subissent les traitements classiques TN permettant la transmission de données numériques comme, par exemple, la compression, le codage correcteur d'erreur, la cryptographie.... (étape T4). L'exécution de la méthode de parcours P des noeuds cibles N par l'agent mobile A permet de déterminer les paramètres de transfert du noeud source N_{S} vers le premier noeud cible intermédiaire N_{I1} (étape T5). Ces paramètres permettent au créateur de lien CL d'ouvrir un canal de communication entre le noeud émetteur N_{E}, qui est ici le noeud source N_{S}, et le noeud récepteur N_{R}, qui est ici le premier noeud intermédiaire N_{I1}, (étape T6). Le flux de bits f_{A S→1} comportant l'agent mobile A est, alors, émis par l'émetteur de flux de bits EF sur le canal ouvert vers le premier noeud cible intermédiaire N_{I1} (étape T7). Une fois l'émission terminée, le canal est fermé (étape T8).

Le transfert se fait par ondes radio. Par exemple, la définition du parcours P peut correspondre à un nombre de bonds radio ou à un réseau radio R. Dans ce cas, l'agent A enregistre son parcours P et soit comporte un algorithme qui lui permet de déterminer le noeud suivant N_{R}, soit accède à un service local à la structure d'accueil pour déterminer le noeud suivant N_{R}. Les liaisons radio étant fluctuantes (de qualité variable au cours du temps), il est a priori difficile de définir l'ordre de parcours des noeuds N. Il est donc préférable de "laisser" l'agent A réaliser son parcours P en lui indiquant à l'initialisation une table de connexion du réseau R et un algorithme de résolution associé.

### (RECEPTION N_{I1})

La figure 4 montre le procédé mis en oeuvre pour la réception d'un agent mobile A par le récepteur d'agent mobile RA du noeud récepteur N_{R}, noeud intermédiaire N_{I1}. Tout d'abord, le canal de communication entre le noeud émetteur NE (noeud source N_{S}) et le noeud récepteur N_{R} (premier noeud intermédiaire N_{I1}) a été ouvert comme décrit précédemment pour la figure 3 (étape R1↔étape T6). Le récepteur de flux de bits RF du noeud intermédiaire N_{I1} reçoit, donc, le flux de bits f_{A S→1} comportant l'agent mobile A émis par le noeud source N_{S} (étape R2). Si l'intégrité du flux reçu f_{A S→1} est vérifiée (étape R3), le flux reçu f_{A S→1} est authentifié grâce, par exemple à un cryptage (étape R4). Ces étapes sont effectuées par des dispositifs de traitements numériques TN⁻¹. Une fois le flux de bits f_{A S→1} comportant l'agent mobile A reçu, le canal de communication est fermé comme indiqué précédemment lors de la description de la figure 3 (étape R5↔étape T8).

Si le flux f_{A S→1} reçu comportant l'agent mobile A a été vérifiée et authentifiée (étapes R3 et R4), le nom de l'agent mobile NOM[A] est extrait du flux f_{A S→1} (étape R6).

L'autorisation d'exécuter ledit agent A sur le noeud intermédiaire N_{I1}, est vérifiée par un vérificateur d'autorisation VA (étape R7). Cette autorisation permet au code C de l'agent mobile A l'accès aux ressources du noeud récepteur N_{R} (premier noeud intermédiaire N_{I1}). L'autorisation réside dans le fait qu'en cas, par exemple, d'incohérence entre les structures d'accueil et les agents, l'agent mobile A ne peut pas s'exécuter. L'utilisation, par exemple, pour les interfaces de l'agent d'interface de type "propriétaire", qui sont à même de remplir le rôle de clé d'accès de manière explicite (interface dédiée) ou implicite; permet d'éviter l'introduction d'un agent externe au système et non désiré.

Si l'agent A n'est pas autorisé à s'exécuter sur ledit noeud N_{I1}, il peut, par exemple, être immédiatement réémis vers un nouveau noeud soit intermédiaire N_{I2} soit final N_{F} du réseau R par l'émetteur EA du noeud N_{I1}.

Si l'agent A est autorisé à s'exécuter sur ledit noeud N_{I1}, le code exécutable C est extrait dudit flux reçu f_{A S→1} (étape R8) ainsi que les paramètres D associés audit code C (étape R9) par l'extracteur d'agent mobile EXa. Les paramètres D0_{E} sont positionnés de manière à initialiser l'exécution dudit code C (étape R10) par le dispositif de positionnement PP. Alors, l'agent A peut s'exécuter (étapes E) avant d'être transféré sur un nouveau noeud soit intermédiaire N_{I2} soit final N_{F} (étapes T).

### (EXECUTION N_{I1})

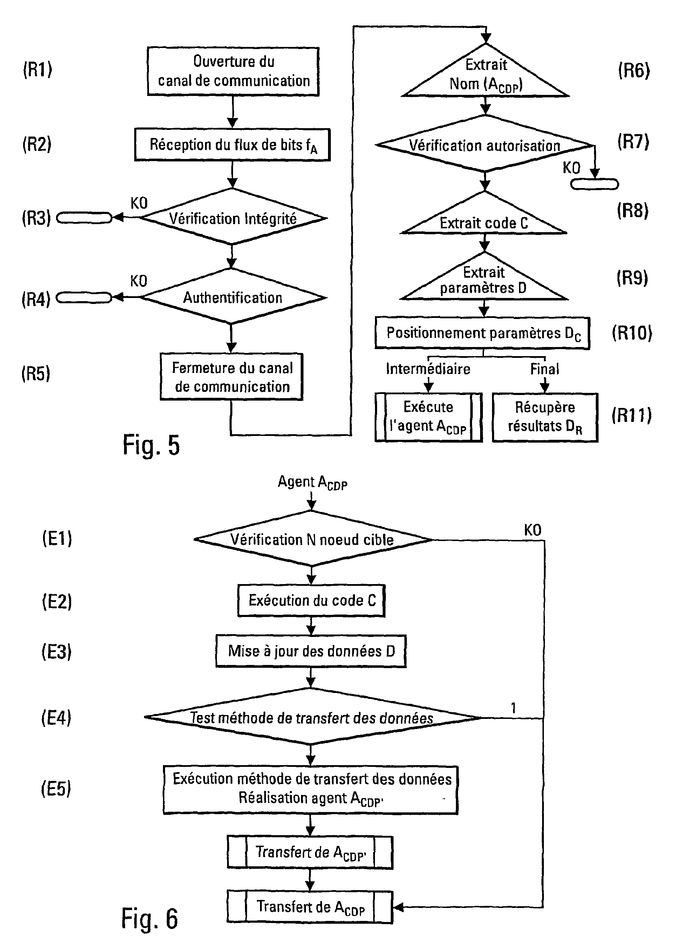

La figure 5 propose un procédé d'exécution de l'agent mobile A. L'agent A vérifie, tout d'abord si le noeud intermédiaire N_{I1} est un noeud cible N_{C} (étape E1). Si, ce n'est pas le cas, il déclenche immédiatement son transfert sur un nouveau noeud soit intermédiaire N_{I2} soit final N_{F} (étapes T). Si, le noeud intermédiaire N_{I1} est un noeud cible, le code est exécuté (étape E2) en utilisant les ressources (microprocesseur µP...) du noeud hôte N_{H}, noeud intermédiaire N_{I1}. Les données D comportant les paramètres D du code C et les données résultantes D_{R} de l'exécution du code C sont mises à jour (étape E3). Les paramètres D mis à jour comportent les données permettant de continuer l'exécution du code C sur un nouveau noeud. Ils enregistrent le contexte dans lequel se trouve le code C au moment où son exécution est figée avant le transfert de l'agent mobile A sur ce nouveau noeud.

Les données résultantes D_{R}, quant à elles, peuvent être transmises de plusieurs manières dont, par exemple, avec l'agent mobile A comme les paramètres D, ou avec un nouvel agent mobile A'. Un test est effectué pour connaître la méthode de transfert des données D_{R} qui va être utiliser (étape E4). Ce test peut, par exemple, se baser sur le volume de données D_{R} à transmettre. Au-dessous d'un certain volume (branche 1), les données D_{R} sont transférées avec l'agent mobile A comme les paramètres D (étapes T). Au-dessus de ce volume (branche 2), la méthode de transfert des données permet de réaliser un nouvel agent A' comportant ces données D_{R} (étape E5).

La transmission intermédiaire des données D_{R} permet d'éviter le transfert d'un agent mobile de grand volume, donc, d'éviter une utilisation importante de la bande passante, ce qui permet de limiter les erreurs de transmission. Lorsqu'un agent mobile A collecte des informations, il va, en effet, être capable de transmettre les résultats intermédiaires D_{R} au noeud final N_{F} soit par établissement d'un lien direct ou indirect, soit par génération d'un agent de transport A' (étape E5).

### (EMISSION N_{I1}→N_{I2})

Puis, ce nouvel agent mobile A' comportant les résultats D_{R} est transféré sur le noeud final N_{F} et l'agent mobile original A est transféré sur un nouveau noeud N. Les transferts des agents mobiles A et A' s'effectuent de ce premier noeud intermédiaire N_{I1} vers, respectivement, un nouveau noeud N et le noeud final N_{F}, par exemple, de la même manière que le transfert de l'agent mobile A du noeud source N_{S} vers le noeud N_{I1} (étapes T) par un émetteur EA de structure semblable à celle de l'émetteur EA du noeud source N_{S}.

### (RECEPTION N_{I2})

Si l'agent mobile A est à nouveau reçu sur un noeud intermédiaire N_{I}, les étapes R de réception, E d'exécution et T de transfert de l'agent mobile A sont identiques à celles effectuées sur le premier noeud intermédiaire et sont effectuées par un récepteur RA identique à celui du premier noeud intermédiaire.

### (RECEPTION FINALE)

La réception d'un agent mobile A sur un noeud final N_{F} comporte les mêmes étapes R1 à R10 et est effectuée par le même type de récepteur RA que décrit précédemment lors la réception d'un agent A sur un noeud intermédiaire N_{I}. Comme le montre la figure 4, l'étape supplémentaire lors d'une réception finale est celle de récupération des résultats de l'exécution D_{R} (étape R11). La récupération de l'ensemble des résultats de l'exécution du code C d'un agent mobile A sur l'ensemble des noeuds N de son parcours N peut être effectuer à partir d'un à plusieurs agents mobiles A, voir A'... par un moyen supplémentaire du récepteur RA: un dispositif de récupération des résultats RR.

Selon un procédé qui n'est pas couvert par la revendication 1, pour réduire la taille de l'agent mobile A et augmenter son efficience, il est possible d'implémenter une partie des fonctionnalités de l'agent mobile A, c'est à dire partie du code C, dans la structure d'accueil des noeuds N. L'agent mobile A transféré comporte alors les paramètres et la partie résiduelle du code non implémentée dans la structure d'accueil. En ce cas la généricité de la structure est dégradée, ce qui aura pour conséquence de réduire les possibilités d'évolution des agents mobiles. C'est une solution pour obtenir un niveau de sécurité important. De plus, cela est bien adapté pour l'accès et la mise à jour de paramètres opérationnels d'un noeud N. En cas d'un nouveau type d'agent A, il sera nécessaire de déployer une nouvelle structure d'accueil.

Les dispositifs décrits ci-dessus peuvent être identiques dans chaque noeud ou spécifiques à un noeud ou un sous-réseau. Par exemple, la source d'agent mobile SA et/ou le dispositif de récupération RR du récepteur RA peuvent être présent uniquement dans un noeud superviseur.

L'utilisation d'un agent mobile A dans un réseau R permet, entre autres, la supervision et l'administration du réseau R lors d'applications comme, par exemple:
- la configuration et la mise à jour du contenu des noeuds N (diffusion d'information à un réseau, un sous-réseau...)
- la collecte d'information (récupération d'états, centralisation de données opérationnelles...),
- l'action à distance (exécution: recherche multi-critères sur chaque noeud par exemple),
- la découverte de topologie,
- la scrutation (validation de chacun des liens d'un réseau, détection automatique de l'ajout ou de la suppression d'un noeud sans intervention humaine, par exemple),
- l'enregistrement ou l'apprentissage du parcours P_{E} effectué par l'agent mobile A (Cela permet à l'agent mobile A de "retrouver son chemin": bond radio, réémission, transmission de données avec utilisation de ce parcours P_{E}...)
- la vérification d'un réseau par diffusion d'une demande d'authentification...

Chaque noeud est capable d'embarquer un service (pas nécessairement le même) et de le mettre à disposition de la fédération de noeuds à laquelle il se connecte. Ainsi, il est possible d'augmenter de façon significative le nombre de fonctionnalités en les répartissant entre les différents noeuds. Chaque noeud appartenant à une fédération peut utiliser les fonctionnalités exposées par les autres noeuds de cette même fédération. Pour cela, il adresse une requête, sous la forme d'un agent mobile A_{RL}, au service de lookup qui établit la liaison avec un noeud N_{C} disposant de cette fonctionnalité. Le code C est alors téléchargé sous la forme d'un agent mobile A, vers le noeud client sur lequel il s'exécute.

Le noeud comportant le processus de lookup réparti les requêtes en fonction de la disponibilité des services et de la charge. Il peut également fournir des statistiques d'utilisation des différents services afin d'optimiser leur répartition sur les différents noeuds.

L'invention concerne un réseau radio dont les liaisons sont fluctuantes. Le canal de communication d'un réseau radio est une ressource limitée de qualité variable dans le temps. L'utilisation de l'agent mobile s'adapte, donc, bien au contexte radiocommunication mobile car il permet de ne transférer que les données nécessaires par opposition à un mécanisme "classique" de requêtes/réponses.

L'agent mobile A étant transmis sous la forme d'un flux de bits f_{A}, il peut subir les mêmes traitements que n'importe quels flux de données numériques comme:
- la compression permettant de réduire la bande passante utilisée,
- la vérification de l'intégrité du transfert (par tatouage logiciel, par exemple). La méthode de vérification d'intégrité du transfert peut, par exemple, adapter le débit de la liaison (codage) et la taille des paquets transmis en fonction de la qualité de liaison en offrant des services de type cheksum et segmentation/réassemblage.
- la mise sous forme de paquets,
- le codage.

L'une des caractéristiques d'un agent mobile A est, dans le cas radio par exemple, le fait que l'exécution du code C de l'agent mobile A ne perturbe pas le fonctionnement nominal ou, pour le moins, l'utilisation RAM et CPU est contrôlée de manière à empêcher une dégradation des performances durable.

De plus, le réseau radio permet la diffusion de l'agent mobile mis sous la forme d'un flux de bits au lieu de la transmission point à point "classique". La diffusion d'un agent mobile A permet de diminuer l'utilisation de la bande passante radio. L'émission de l'agent mobile A est réalisée vers tous les noeuds N en visibilité radio. L'agent mobile A est, alors, collaboratif avec lui-même puisqu'il est susceptible d'être reçu plusieurs fois par un même noeud N. Par exemple, l'agent mobile A possède un identifiant (forme de gestion de configuration) pour ne pas être exécuté plusieurs fois par le même noeud N. Un dispositif de marquage MQ utilisant, par exemple, l'identifiant de l'agent mobile A peut être utilisé lors d'un des processus utilisant l'agent mobile au niveau d'un noeud comme, par exemple, l'exécution de l'agent mobile, l'émission de l'agent mobile, la réception de l'agent mobile (cf. figure 2)... L'agent mobile A est, alors, capable de faire la synthèse des données collectées D_{R} lors des différents parcours.

## Revendications

1. Procédé de transmission d'un agent mobile (A) dans un réseau radio (R) dont les liaisons sont fluctuantes, ledit agent mobile comportant au moins un code exécutable (C),
des données associées (D) audit agent mobile (A) et
une méthode de parcours, P, des noeuds cibles sur lesquels l'agent mobile doit s'exécuter,
la transmission non seulement dudit code exécutable (C) mais aussi desdites données associées (D) et de ladite méthode de parcours (P) permettant audit code exécutable (C) d'être exécutable de façon autonome, en particulier en ce que l'ordre de parcours des noeuds n'est pas défini a priori, et en ce que on laisse l'agent mobile (A) réaliser son parcours en éxécutant ladite méthode de parcours, prenant en compte la qualité variable au cours du temps des liasions radios, ledit procédé de transmission d'un agent mobile comprenant :
• [T2-T3] : la conversion (A/F) dudit agent mobile (A) en un flux de bits (f_{A}) à émettre par un émetteur (EA) d'un noeud émetteur (NE),
• [T7] : l'émission dudit flux de bits (f_{A}) par l'émetteur (EA) dudit noeud émetteur (N_{E}) vers ledit/lesdits au moins un noeud récepteur (N_{R}),
• [T5-T6] : la création d'un lien entre ledit noeud émetteur (N_{E}) et au moins un noeud récepteur (N_{R}) dans ledit réseau (R) sur lequel ledit flux de bits (f_{A}) est émis,
ladite création de lien comportant au moins les étapes suivantes :
• [T5] : l'exécution de ladite méthode de parcours (P) des noeuds cibles sur lesquels l'agent mobile (A) doit s'exécuter, au moyen dudit agent mobile (A) comportant ladite méthode de parcours (P),
• la génération de paramètres de transfert du noeud émetteur vers ledit/lesdits au moins un noeuds récepteurs par l'exécution de ladite méthode de parcours (P),
• l'utilisation de ces paramètres pour ouvrir un canal de communication entre le noeud émetteur (N_{E}) et ledit/lesdits au moins un noeuds récepteurs (N_{R}),
• la fermeture dudit canal, cette fermeture ayant lieu après ladite étape d'émission dudit flux de bits:

2. Procédé de transmission selon la revendication 1, comportant au moins les étapes suivantes :
• [T2] : la conversion du code exécutable (C) dudit agent mobile (A) en flux de bits lors de ladite conversion (A/F),
• [T3] : la conversion des données associées (D) audit agent mobile (A) en flux de bits lors de ladite conversion (A/F),
• [T4] : la synthèse de plusieurs flux de bits, comportant au moins le flux de bits obtenu par conversion du code exécutable et le flux de bits obtenu par conversion des données, en un flux de bits (f_{A}) comportant ledit agent mobile (A) lors de ladite conversion (A/F).

3. Procédé de transmission selon l'une des revendications précédentes, comportant en outre une étape de marquage dudit noeud émetteur (N_{E}) par un identifiant dudit agent mobile (A).

4. Procédé de transmission selon l'une quelconque des revendications précédentes, comportant en outre au moins les étapes suivantes :
• [R2] : la réception d'un flux de bit (f_{A}),
• [R6 à R9] : l'extraction de l'agent mobile (A) dudit flux de bits reçu (f_{A}).

5. Procédé de transmission d'un agent mobile (A) selon la revendication 4, comportant en outre au moins les étapes suivantes :
• [R8] : l'extraction du code exécutable (C) dudit flux de bits reçu (f_{A}) lors de l'extraction dudit agent mobile (A),
• [R9] : l'extraction des données associées (D) dudit flux de bits reçu (f_{A}) lors de l'extraction dudit agent mobile (A),
• [R10] : le positionnement des paramètres d'exécution DE compris ou non dans les données (D) extraites.

6. Procédé de transmission d'un agent mobile (A) selon l'une des revendications 4 ou 5, comportant en outre au moins les étapes suivantes :
• [R2 à R4] : un ou plusieurs traitements numériques (TN₁⁻¹... TNⱼ ⁻¹) dudit flux de bits reçu (f_{A}),
• [R7] : la vérification de l'autorisation d'exécution sur ledit/lesdits au moins un noeuds récepteurs (N_{R}) de l'agent mobile (A) contenu dans ledit flux de bits (f_{A}) reçu déclenchant l'extraction dudit agent mobile (A).

7. Procédé de transmission d'un agent mobile (A) selon la revendication 6, comportant en outre le marquage dudit/desdits au moins un noeud récepteur (N_{R}) par un identifiant dudit agent mobile (A).

## Claims

1. Method of transmitting a mobile agent (A) in a radio network (R) whose links are fluctuating, said mobile agent comprising at least one executable code (C),
data associated (D) with said mobile agent (A) and a traversal procedure,P, target nodes on which the mobile agent is to be executed, the transmission not only of said executable code (C) but also of said associated data (D) and of said traversal procedure (P) making it possible for said executable code (C) to be executable in a standalone fashion in particular in that the order of traversal of the nodes is not defined a priori, and in that the mobile agent (A) is allowed to carry out its traversal by executing said traversal procedure, taking account of the time-varying quality of the radio links,
said method of transmitting a mobile agent comprising :
• [T2-T3]: the conversion (A/F) of said mobile agent (A) into a bitstream (f_{A}) to be emitted by a transmitter (EA) of a transmitter node (N_{E}),
• [T5-T6]: the creation of a link between said transmitter node (N_{E}) and at least one receiver node (N_{R}) in said network (R) on which said bitstream (f_{A}) is emitted,
• [T7]: the transmission of said bitstream (f_{A}) by the transmitter (EA) from said transmitter node (N_{E}) to said at least one receiver node (N_{R}),
said creation of a link comprising at least the following stages :
• [T5]: the execution of said procedure (P) for traversing the target nodes on which the mobile agent (A) is to be executed, by means of said mobile agent (A) comprising said traversal procedure (P),
• the generation of parameters of transfer from the transmitter node to said at least one receiver node by the execution of said traversal procedure (P),
• the use of said parameters to open a communication channel between the transmitter node (N_{E}) and said at least one receiver node (N_{R}),
• the closure of said channel, this closure taking place after said stage of transmission of said bitstream.

2. Transmission method according to Claim 1, comprising at least the following stages :
• [T2]: the conversion of the executable code (C) of said mobile agent (A) into bitstreams upon said conversion (A/F),
• [T3]: the conversion of the data (D) associated with said mobile agent (A) into bitstreams upon said conversion (A/F),
• [T4]: the combining of several bitstreams, comprising at least the bitstream obtained by conversion of the executable code and the bitstream obtained by conversion of the data, into a bitstream (f_{A}) comprising said mobile agent (A) upon said conversion (A/F).

3. Transmission method according to either of the preceding claims, further comprising a stage of marking said transmitter node (N_{E}) by an identifier of said mobile agent (A).

4. Transmission method according to any one of the preceding claims, further comprising at least the following stages :
• [R2]: the receiving of a bitstream (f_{A}),
• [R6 to R9]: the extraction of the mobile agent (A) from said received bitstream (f_{A}).

5. Method of transmitting a mobile agent (A) according to Claim 4, further comprising at least the following stages :
• [R8]: the extraction of the executable code (C) from said received bitstream (f_{A}) upon the extraction of said mobile agent (A),
• [R9]: the extraction of the data (D) associated with said received bitstream (f_{A}) upon the extraction of said mobile agent (A),
• [R10]: the setting of the runtime parameters D_{E} comprised or not comprised in the extracted data (D).

6. Method of transmitting a mobile agent (A) according to either of Claims 4 and 5, further comprising at least the following stages :
• [R2 to R4]: one or more digital processing operations (TN₁⁻¹ ... TNj⁻¹) on said received bitstream (f_{A}),
• [R7]: verification of the authorization to run, on said at least one receiver node (N_{R}), the mobile agent (A) contained in said received bitstream (f_{A}), triggering the extraction of said mobile agent (A).

7. Method of transmitting a mobile agent (A) according to Claim 6, further comprising the marking of said at least one receiver node (N_{R}) by an identifier of said mobile agent (A).

## Patentansprüche

1. Verfahren zur Übertragung eines mobilen Agenten (A) in einem Funknetz (R), dessen Verbindungen schwankend sind, wobei der mobile Agent mindestens einen ausführbaren Code (C),
dem mobilen Agenten (A) zugeordnete Daten (D) und eine Durchlaufmethode P der Zielknoten aufweist, an denen der mobile Agent ausgeführt werden soll, wobei die Übertragung nicht nur des ausführbaren Codes (C), sondern auch der zugeordneten Daten (D) und der Durchlaufmethode (P) es dem ausführbaren Code (C) ermöglicht, autonom ausführbar zu sein, insbesondere **dadurch**, dass der Durchlaufbefehl der Knoten nicht von vorneherein definiert ist, und dass man den mobilen Agenten (A) seinen Durchlauf durchführen lässt, indem er die Durchlaufmethode ausführt, unter Berücksichtigung der im Lauf der Zeit veränderlichen Qualität der Funkverbindungen,
wobei das Verfahren zur Übertragung eines mobilen Agenten aufweist:
• [T2-T3]: die Konvertierung (A/F) des mobilen Agenten (A) in einen von einem Sender (EA) eines Sendeknotens (N_{E}) zu sendenden Bitstrom (f_{A}),
• [T5-T6]: die Erzeugung einer Verbindung zwischen dem Sendeknoten (N_{E}) und mindestens einem Empfangsknoten (N_{R}) in dem Netz (R), in dem der Bitstrom (f_{A}) gesendet wird,
• [T7]: das Senden des Bitstroms (f_{A}) durch den Sender (EA) des Sendeknotens (N_{E}) zu dem/den mindestens einen Empfangsknoten (N_{R}),
wobei die Erzeugung einer Verbindung mindestens die folgenden Schritte enthält:
• [T5]: die Ausführung der Durchlaufmethode (P) der Zielknoten, an denen der mobile Agent (A) ausgeführt werden soll, mittels des die Durchlaufmethode (P) enthaltenden mobilen Agenten (A),
• die Erzeugung von Transferparametern des Sendeknotens zu dem/den mindestens einen Empfangsknoten durch die Ausführung der Durchlaufmethode (P),
• die Verwendung dieser Parameter, um einen Kommunikationskanal zwischen dem Sendeknoten (N_{E}) und dem/den mindestens einen Empfangsknoten (N_{R}) zu öffnen,
• das Schließen des Kanals, wobei dieses Schließen nach dem Schritt des Sendens des Bitstroms erfolgt.

2. Übertragungsverfahren nach Anspruch 1, das mindestens die folgenden Schritte aufweist:
• [T2]: die Konvertierung des ausführbaren Codes (C) des mobilen Agenten (A) in Bitströme bei der Konvertierung (A/F),
• [T3]: die Konvertierung der dem mobilen Agenten (A) zugeordneten Daten (D) in Bitströme bei der Konvertierung (A/F),
• [T4]: die Synthese mehrerer Bitströme, die mindestens den Bitstrom, der durch Konvertierung des ausführbaren Codes erhalten wurde, und den Bitstrom aufweisen, der durch Konvertierung der Daten erhalten wurde, in einen den mobilen Agenten (A) enthaltenden Bitstrom (f_{A}) bei der Konvertierung (A/F).

3. Übertragungsverfahren nach einem der vorhergehenden Ansprüche, das außerdem einen Schritt der Markierung des Sendeknotens (N_{E}) durch eine Kennung des mobilen Agenten (A) aufweist.

4. Übertragungsverfahren nach einem der vorhergehenden Ansprüche, das außerdem mindestens die folgenden Schritte aufweist:
• [R2]: den Empfang eines Bitstroms (f_{A}),
• [R6 bis R9]: die Entnahme des mobilen Agenten (A) aus dem empfangenen Bitstrom (f_{A}).

5. Verfahren zur Übertragung eines mobilen Agenten (A) nach Anspruch 4, das außerdem mindestens die folgenden Schritte aufweist:
• [R8]: die Entnahme des ausführbaren Codes (C) aus dem empfangenen Bitstrom (f_{A}) bei der Entnahme des mobilen Agenten (A),
• [R9]: die Entnahme der zugeordneten Daten (D) aus dem empfangenen Bitstrom (f_{A}) bei der Entnahme des mobilen Agenten (A),
• [R10]: die Positionierung der Ausführungsparameter D_{E}, die in den entnommenen Daten (D) enthalten sind oder nicht.

6. Verfahren zur Übertragung eines mobilen Agenten (A) nach einem der Ansprüche 4 oder 5, das außerdem mindestens die folgenden Schritte aufweist:
• [R2 bis R4]: eine oder mehrere digitale Verarbeitungen (TN₁⁻¹, ..., TNⱼ⁻¹) des empfangenen Bitstroms (f_{A}),
• [R7]: die Prüfung der Ausführungsberechtigung an dem/den mindestens einen Empfangsknoten (N_{R}) des im empfangenen Bitstrom (f_{A}) enthaltenen mobilen Agenten (A), was die Entnahme des mobilen Agenten (A) auslöst.

7. Verfahren zur Übertragung eines mobilen Agenten (A) nach Anspruch 6, das außerdem die Markierung des/der mindestens einen Empfangsknoten(s) (N_{R}) durch eine Kennung des mobilen Agenten (A) aufweist.
